# FASCICULE DE BREVET EUROPEEN

(11) **EP 1 029 490 B1**
(45) Date de publication et mention de la délivrance du brevet: **19.11.2003**
(21) Numéro de dépôt: 00420033.3
(22) Date de dépôt: 16.02.2000
(51) Int. Cl.: A47J 37/12, A47J 36/06

(54) **Couvercle d'appareil de cuisson**
Deckel für Kochtopf
Lid for cooking utensil

(30) Priorité: 19.02.1999 FR 9902256
(43) Date de publication de la demande: 23.08.2000
(73) Titulaire: SEB S.A., 69130 Ecully (FR)
(72) Inventeur: Dumoux, Philippe, 21120 Gemeaux (FR)

(56) Documents cités:
- EP-A- 0 815 785
- FR-A- 2 615 274
- PATENT ABSTRACTS OF JAPAN vol. 16, no. 207 (C-0941), 18 mai 1992 (1992-05-18) -& JP 04 038916 A (MATSUSHITA ELECTRIC IND CO), 10 février 1992 (1992-02-10)

## Description

La présente invention concerne un couvercle pour appareil de cuisson électrique à usage domestique, tel que notamment mais non exclusivement une friteuse, et se rapporte plus particulièrement à la partie formant la face inférieure du couvercle.

Les couvercles conformes à l'état de la technique comprennent généralement deux parties principales, soit la partie formant la face inférieure du couvercle, cette partie directement en contact avec les vapeurs émises lors de la cuisson étant aussi appelée pare-vapeur, et la partie garniture extérieure, servant d'habillage et de décoration. Ces deux éléments comportent des ouvertures dans lesquelles sont agencés la cartouche filtrante et le hublot de contrôle.

Dans les documents FR 2 615 274 et EP 0 815 785, le contre-couvercle est fabriqué à partir d'une plaque métallique emboutie pour obtenir une forme sensiblement identique à la forme de la cuve de cuisson et comporte deux découpes pour d'une part le hublot de contrôle et d'autre part la cartouche filtrante. Cette plaque est percée afin de pouvoir visser les pièces plus complexes telles que la charnière ou l'organe de verrouillage. Il apparaît clairement que cette plaque métallique a besoin de nombreux accessoires et d'opérations pour pouvoir remplir sa tâche qui est une fermeture amovible du volume de vapeur de la cuve de cuisson. De par sa réalisation en matière métallique, en particulier en aluminium pour son absence de corrosion, les formes obtenues sont limitées aux résultats d'opérations d'emboutissage et de pliage. A cela, il faut ajouter une nécessaire opération de finition pour supprimer les angles vifs et les éventuelles bavures.

Les formes d'exécution telles que décrites dans l'état de la technique ont pour conséquence que la réalisation et le montage du couvercle nécessitent de nombreuses pièces entraînant un coût élevé et une durée de montage importante. Les différents matériaux utilisés ne permettent pas de garantir la bonne tenue de l'ensemble contre-couvercle / garniture extérieure lors des lavages à la machine.

Le but de la présente invention est de disposer d'un contre-couvercle simple à réaliser et comportant un minimum de pièces.

Selon l'invention, ce but est atteint par un couvercle d'appareil de cuisson pour cuiseur électrique monté articulé sur un boîtier support de cuve, comprenant une garniture extérieure et un contre-couvercle, ce dernier comprenant notamment une surface d'obturation de la cuve et une partie mobile de l'articulation, le couvercle comprenant également un dispositif d'accrochage au boîtier support de cuve, du fait que la surface d'obturation et la partie mobile de l'articulation du contre-couvercle sont moulées ou thermoformées en une seule pièce en une matière plastique thermorésistante.

Par matière plastique thermorésistante, on entend une matière plastique présentant des propriétés thermomécaniques adaptées au type de cuisson mis en oeuvre dans l'appareil. Pour un appareil réalisant uniquement des cuissons en un milieu aqueux, tel que par exemple un cuiseur à riz, une matière plastique résistant à des températures de l'ordre de 80°C à 110°C peut être suffisante, alors que pour un appareil réalisant des cuissons avec des matières grasses, tel que par exemple une friteuse, une matière plastique résistant à des températures de l'ordre de 150°C, voire 190°C, pourra être nécessaire.

Ainsi, grâce à la configuration du contre-couvercle selon l'invention, la fabrication d'une seule pièce est suffisante pour réaliser cette fonction, ce qui permet un gain appréciable de temps de montage et de coût. Le moulage dans un matériau plastique autorise des formes qui étaient impossibles avec une tôle pliée, par exemple la réalisation de tous les supports des différentes pièces additionnelles tels que la cartouche filtrante ou le hublot de contrôle. Il est certain que le moulage dans la même pièce du dispositif d'accrochage est une variante préférentielle de l'invention.

Jusqu'à présent, la rigidité du contre-couvercle était due uniquement à l'épaisseur de la plaque métallique. Cependant, la réalisation de cet élément en plastique moulé permet d'obtenir d'autres formes plus intéressantes sur le plan de la rigidité telles que la forme concave qui assure une grande stabilité à l'ensemble. Des nervures peuvent être placées aux endroits de fortes sollicitations, en particulier près des charnières.

La réalisation par moulage permet de prévoir les différents supports pour les accessoires tels que la cartouche filtrante et le hublot de contrôle. Ainsi l'assemblage de ces éléments sur le contre-couvercle est facilité. Grâce à la réalisation d'ergots de retenue, il est possible d'assembler la garniture extérieure et le contre-couvercle par simple clipsage. Il n'est alors plus nécessaire de prévoir une pièce amovible sur la garniture extérieure pour permettre à l'utilisateur d'accéder à la cartouche filtrante, l'utilisateur pouvant ôter la garniture extérieure clipsée sur le pare vapeur.

De plus, la face du contre-couvercle en contact avec les vapeurs et les projections émises pendant la cuisson est plus facile à nettoyer grâce à ses formes très douces, sans bavures ni aspérités susceptibles de piéger les salissures ou de gêner l'essuyage.

Le joint nécessaire à la fermeture étanche de la cuve est monté sur le contre-couvercle en utilisant des retenues directement obtenues par le moulage de cette pièce. Ces retenues peuvent être soit une rainure entourant le bord du contre-couvercle, le joint venant s'emboîter dans ladite rainure courant à l'extérieur du contre-couvercle, soit des logements ménagés sur la face inférieure du contre-couvercle, dans lesquels viennent se fixer des protubérances du joint.

Le contre-couvercle selon l'invention présente l'avantage d'être facile à nettoyer de par ses formes douces et sans aspérités. Il peut également être placé dans le lave-vaisselle grâce à sa matière résistant aux agents lessiviels.

Un autre aspect de l'invention est son mode de fabrication. Par un choix judicieux de la forme du moule et de la ligne de démoulage, on arrive à supprimer quasiment tous les tiroirs qui sont autant d'éléments coûteux et susceptibles d'introduire des imperfections dans la pièce finie.

Pour atteindre ce but, la ligne de démoulage est placée dans un plan rejoignant l'organe de verrouillage et l'axe de la charnière. Ainsi, tous les éléments tels que charnières, support du joint d'étanchéité, support de cartouche filtrante et de hublot de contrôle, s'étendent perpendiculairement à ce plan de démoulage et sont réalisés en une seule opération.

Pour réaliser l'axe de rotation de la charnière par exemple, des orifices sont ménagés dans la structure principale pour permettre au moule supérieur de former la moitié de l'axe de la charnière, l'autre partie du moule étant responsable de l'autre moitié.

L'invention sera mieux comprise grâce à la description détaillée qui va suivre en se référant aux dessins annexés pris à titre d'exemples non limitatifs, dans lesquels :
la figure 1 représente une vue de profil du contre-couvercle dans une forme d'exécution dite ronde,
la figure 2 représente la même vue de profil du contre-couvercle de type rond avec ses accessoires,
la figure 3 représente une vue éclatée d'un couvercle complet comprenant la garniture extérieure et le contre-couvercle dans une forme d'exécution dite rectangulaire,
les figures 4 et 5 sont une coupe de deux formes d'exécution du joint de cuve.

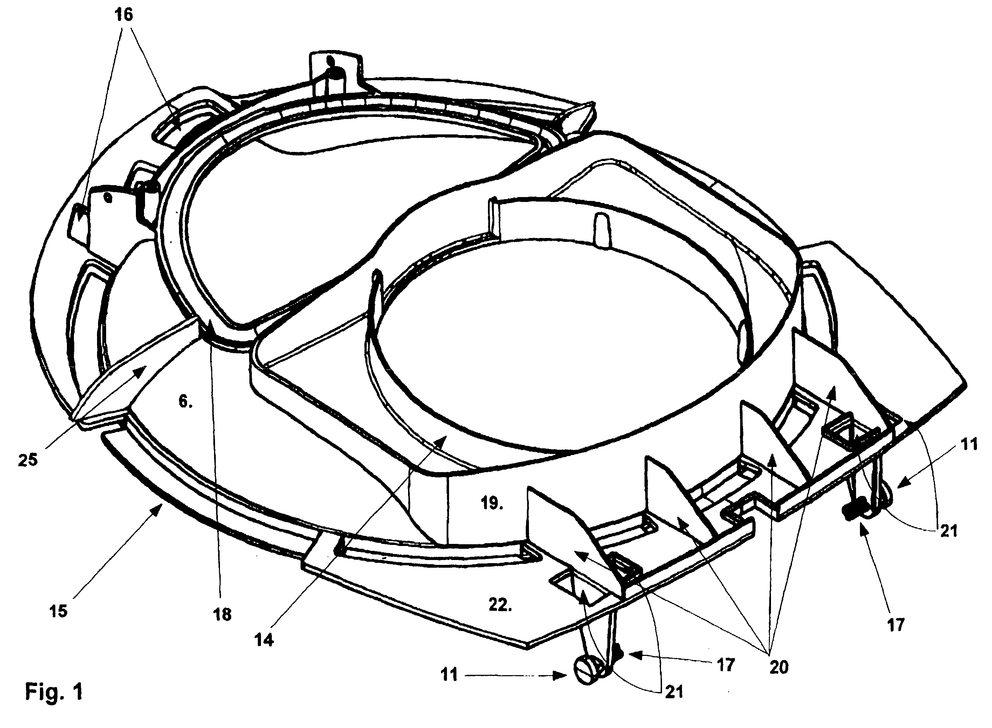

Sur la figure 1, on observe le contre-couvercle 6 dans une première forme d'exécution tel que sorti du moule de fabrication et prêt au montage. Sur la droite du dessin se trouvent les charnières 11, 17 composées d'un bras 11 et d'un axe 17, ces deux éléments étant obtenus sans tiroirs grâce à la présence d'orifices 21 qui permettent au moule supérieur de former la moitié de l'axe 17 et au moule inférieur, l'autre moitié de l'axe 17. Le même principe est utilisé pour la réalisation de la nervure 15 soutenant le joint. On constate que cette nervure 15 n'est pas continue et qu'elle est interrompue pour la fixation d'autres éléments comme par exemple la plaque support de charnières 22 dont l'attachement au reste du contre-couvercle est renforcé par des nervures 20. De cette manière le joint sera placé tout autour de la surface d'obturation de la cuve en s'insérant dans sa nervure 15. Il est maintenu dans sa position par son élasticité.

L'ensemble fait preuve d'une grande rigidité grâce notamment à la nervure 19 servant également de point d'appui aux nervures 20 renforçant les charnières. On distingue les deux passages 16 du mécanisme de fermeture du contre-couvercle. Dans cette forme d'exécution, ces passages sont traversés par des crochets, actionnés depuis la garniture extérieure, et qui viennent s'accrocher dans un orifice prévu à cet effet, solidaire du support de cuve.

La forme générale du contre-couvercle 6, mis en évidence par la forme de la nervure 19, est concave vue du dessous. Cette forme de coque est particulièrement favorable pour rigidifier l'ensemble. Cette forme de coque permet également de réduire l'épaisseur de matière nécessaire. Des nervures latérales additionnelles 25 peuvent également être prévues pour rigidifier les parties extérieures du contre-couvercle 6.

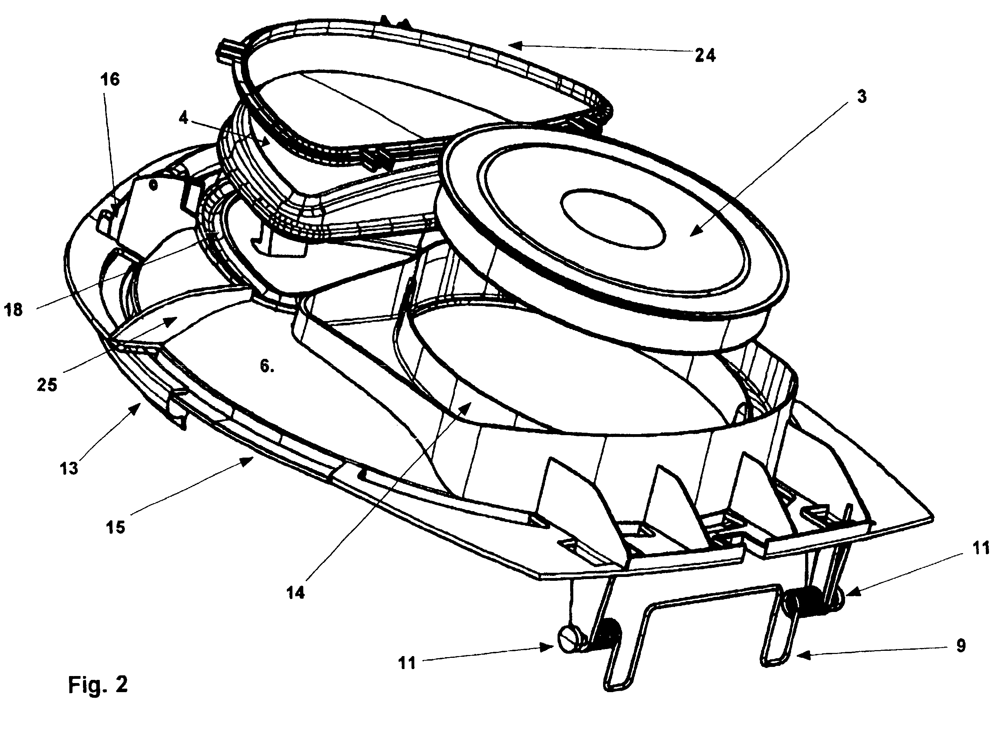

Sur la figure 2, nous voyons les deux éléments prévus pour les orifices, c'est à dire le hublot 4 et la cartouche filtrante 3. Le hublot 4 vient se poser sur un logement 18 entourant l'orifice. Le hublot 4 est maintenu en place grâce à une entretoise 24 vissée sur le pare vapeur 6. La cartouche filtrante 3 vient s'emboîter dans le logement formé par la nervure 14. Son rebord intérieur assure une position stable et étanche de la cartouche filtrante. Sur l'axe de la charnière est monté un ressort 9 qui sert à soulever le couvercle lorsqu'on appuie sur le levier d'ouverture. Sa présence est fort utile pour que l'ouverture du couvercle puisse s'effectuer avec une main. Dans le cas contraire, il faudrait soulever le couvercle en même temps que l'on appuie sur la commande d'ouverture.

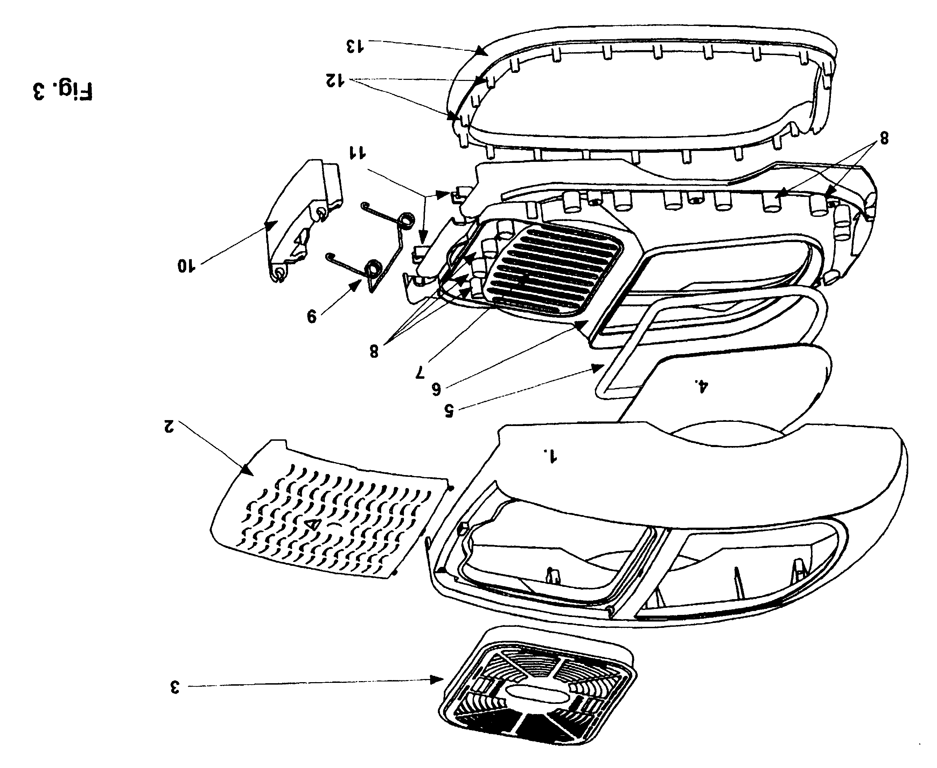

La figure 3 est une vue éclatée du couvercle dans son ensemble dans une autre forme d'exécution dite rectangulaire, constitué par la garniture extérieure 1 sur laquelle un logement est aménagé pour le passage de la cartouche filtrante 3. Un bouchon de filtre 2 vient fermer le logement pour obtenir une surface homogène à l'extérieur. Le bouchon 2 est mis en place sur la garniture extérieure 1 par coulissement et maintient une étanchéité annulaire autour de la cartouche filtrante 3 disposée dans le logement de la garniture extérieure. Un deuxième logement est prévu pour le hublot 4 qui est tenu en place collé ou serré sur le contre-couvercle 6 au moyen d'un joint 5. Sur le contre-couvercle 6, une grille 7 est placée comme support de la cartouche filtrante 3, l'étanchéité étant assurée par le bord d'appui de la cartouche filtrante 3 maintenue par le bouchon 2.

Le ressort 9 a pour fonction de provoquer la levée du couvercle dès lors que la commande de déverrouillage du couvercle a été actionnée. L'élément de support de charnière 10 est placé dans le boîtier support de cuve, le contre-couvercle 6 venant se solidariser avec ce support par les deux charnières 11.

Le joint 13 comporte des protubérances de fixation 12 qui viennent s'insérer dans des logements 8 prévus à cet effet dans la partie intérieure du contre-couvercle. Le montage se fait en force, sans adjonction de colle ou de vis. Ainsi il est possible d'échanger le joint facilement.

L'assemblage du contre-couvercle 6 et de la garniture extérieure s'effectue au moyen de vis, les têtes de celles-ci étant placées sous le pourtour du joint 13 et donc invisibles lorsque le joint 13 est en place. Cet ensemble constituant le couvercle d'un appareil de cuisson, peut être placé dans le lave-vaisselle après avoir préalablement enlevé la cartouche filtrante 3. En effet, cette dernière comporte des éléments, tels que des charbons actifs, qui ne supportent pas les agents lessiviels.

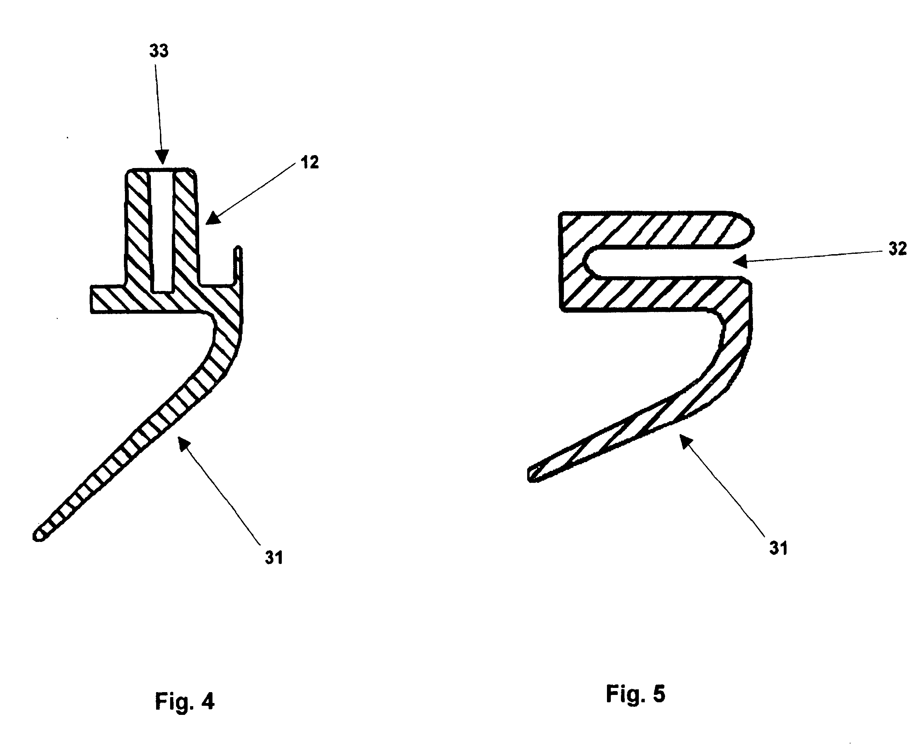

La figure 4 représente une vue en coupe d'une forme possible du joint 13 au niveau d'une protubérance 12 dans sa forme d'exécution prévue pour le couvercle dit rectangulaire. Ces protubérances 12 destinées à être insérées dans la face intérieure du contre-couvercle ont une forme tubulaire. Les orifices du contre-couvercle disposent d'une tige centrale venant s'insérer dans l'ouverture circulaire 33. Ainsi les protubérances sont fermement emboîtées dans le contre-couvercle sans nécessiter d'autres moyens. La partie languette 31 va venir se poser sur le bord de la cuve lors de la fermeture du couvercle.

La figure 5 représente une vue en coupe d'une forme possible du joint 13 dans sa forme d'exécution prévue pour le couvercle dit circulaire. L'ouverture supérieure 32 du joint 13 est destinée à être montée sur la rainure 15 du contre-couvercle des figures 1 et 2. En jouant sur l'élasticité, on ouvre le joint de telle manière qu'il vienne se placer circulairement dans la rainure 15. Il reste ainsi facilement démontable. La partie languette 31 va venir se poser sur le bord de la cuve lors de la fermeture du couvercle.

Bien que les exemples illustrent des exécutions qui comportent un hublot de contrôle, cette invention s'étend également aux contre-couvercles ne disposant pas de hublot de contrôle. A titre de variante, la garniture extérieure peut ne couvrir qu'une partie du contre-couvercle, par exemple au dessus de la grille 7.

Dans le mode de réalisation préféré de l'invention, le contre-couvercle est réalisé en PBTP chargé, par exemple renforcé par au moins 20% de fibres de verre.

Le joint 13 peut également être fixé au contre-couvercle par collage, ou être obtenu par surmoulage ou comoulage avec le contre-couvercle.

Le contre-couvercle 6 peut également être thermoformé par des moyens connus tels que BMC ou SMC notamment.

## Revendications

1. Couvercle d'appareil de cuisson pour cuiseur électrique, monté articulé sur un boîtier support de cuve, comprenant une garniture extérieure (1) et un contre-couvercle (6), ce dernier comprenant notamment une surface d'obturation de la cuve et une partie mobile de l'articulation (11, 17), le couvercle comprenant également un dispositif d'accrochage (16) au boîtier support de cuve, **caractérisé en ce que** la surface d'obturation et la partie mobile de l'articulation (11, 17) du contre-couvercle sont moulées ou thermoformées en une seule pièce en une matière plastique thermorésistante.

2. Couvercle d'appareil de cuisson pour cuiseur électrique selon la revendication 1, **caractérisé en ce que** le dispositif d'accrochage (16) est monté sur le contre-couvercle.

3. Couvercle d'appareil de cuisson pour cuiseur électrique selon la revendication 2, **caractérisé en ce que** le dispositif d'accrochage (16) du contre-couvercle est moulé dans la même pièce que la surface d'obturation et la partie mobile de l'articulation.

4. Couvercle d'appareil de cuisson pour cuiseur électrique selon l'une des revendications 1 à 3, **caractérisé en ce que** le contre-couvercle comprend un logement de cartouche filtrante (14) moulé dans la même pièce.

5. Couvercle d'appareil de cuisson pour cuiseur électrique selon l'une des revendications 1 à 4, **caractérisé en ce que** le contre-couvercle comprend un logement de hublot de contrôle (18) moulé dans la même pièce.

6. Couvercle d'appareil de cuisson pour cuiseur électrique selon l'une des revendications 1 à 5, **caractérisé en ce que** le contre-couvercle comprend un joint d'étanchéité (13) destiné à reposer sur le rebord de la cuve et monté amovible tout autour de la surface d'obturation de la cuve.

7. Couvercle d'appareil de cuisson pour cuiseur électrique selon la revendication 6, **caractérisé en ce que** le joint d'étanchéité (13) est monté sur une nervure (15) entourant la surface d'obturation de la cuve.

8. Couvercle d'appareil de cuisson pour cuiseur électrique selon la revendication 6, **caractérisé en ce que** le joint d'étanchéité (13) dispose de protubérances (12) qui sont insérées dans des logements (8) du contre-couvercle (6) prévus à cet effet et répartis tout autour de la surface d'obturation de la cuve.

9. Couvercle d'appareil de cuisson pour cuiseur électrique selon la revendication 6, **caractérisé en ce que** le joint (13) est fixé par collage.

10. Couvercle d'appareil de cuisson pour cuiseur électrique, selon la revendication 6, **caractérisé en ce que** le joint (13) est obtenu par surmoulage ou par comoulage.

11. Couvercle d'appareil de cuisson pour cuiseur électrique selon les revendications 1 à 10, **caractérisé en ce que** la garniture extérieure (1) et le contre-couvercle (6) sont assemblés par clipsage.

12. Couvercle d'appareil de cuisson pour cuiseur électrique selon les revendications 1 à 11, **caractérisé en ce que** le contre-couvercle (6) présente une forme de coque.

13. Couvercle d'appareil de cuisson pour cuiseur électrique selon les revendications 1 à 12, **caractérisé en ce que** le contre-couvercle (6) est réalisé en PBTP chargé.

## Patentansprüche

1. Kochvorrichtungsdeckel für einen elektrischen Kocher, der an ein Wannenträgergehäuse angelenkt angebracht ist, mit einem äußeren Einsatz (1) und einem Gegendeckel (6), wobei dieser insbesondere eine Fläche zum Verschließen der Wanne und einen beweglichen Gelenkteil (11, 17) aufweist, wobei der Deckel auch eine Einrichtung (16) zum Einhaken an dem Wannenträgergehäuse aufweist, **dadurch gekennzeichnet, daß** die Verschlußfläche und der bewegliche Gelenkteil (11, 17) des Gegendeckels in einem einzigen Teil aus einem wärmebeständigen Kunststoff geformt oder wärmegeformt sind.

2. Kochvorrichtungsdeckel für einen elektrischen Kocher nach Anspruch 1, **dadurch gekennzeichnet, daß** die Einhakeinrichtung (16) an dem Gegendeckel angebracht ist.

3. Kochvorrichtungsdeckel für einen elektrischen Kocher nach Anspruch 2, **dadurch gekennzeichnet, daß** die Einhakeinrichtung (16) des Gegendeckels im gleichen Teil wie die Verschlußfläche und der bewegliche Gelenkteil geformt ist.

4. Kochvorrichtungsdeckel für einen elektrischen Kocher nach einem der Ansprüche 1 bis 3, **dadurch gekennzeichnet, daß** der Gegendeckel eine Aufnahme für einen Filtereinsatz (14) aufweist, die in dem gleichen Teil geformt ist.

5. Kochvorrichtungsdeckel für einen elektrischen Kocher nach einem der Ansprüche 1 bis 4, **dadurch gekennzeichnet, daß** der Gegendeckel eine Kontrollfensteraufnahme (18) aufweist, die in dem gleichen Teil geformt ist.

6. Kochvorrichtungsdeckel für einen elektrischen Kocher nach einem der Ansprüche 1 bis 5, **dadurch gekennzeichnet, daß** der Gegendeckel eine Dichtung (13) aufweist, die auf dem Rand der Wanne ruhen soll und abnehmbar ganz um die Verschlußfläche der Wanne angebracht ist.

7. Kochvorrichtungsdeckel für einen elektrischen Kocher nach Anspruch 6, **dadurch gekennzeichnet, daß** die Dichtung (13) an einer Rippe (15) angebracht ist, die die Verschlußfläche der Wanne umgibt.

8. Kochvorrichtungsdeckel für einen elektrischen Kocher nach Anspruch 6, **dadurch gekennzeichnet, daß** die Dichtung (13) über Vorsprünge (12) verfügt, die in Aufnahmen (8) des Gegendeckels (6) eingeführt sind, die zu diesem Zweck vorgesehen und ganz um die Verschlußfläche der Wanne verteilt sind.

9. Kochvorrichtungsdeckel für einen elektrischen Kocher nach Anspruch 6, **dadurch gekennzeichnet, daß** die Dichtung (13) durch Klebung befestigt ist.

10. Kochvorrichtungsdeckel für einen elektrischen Kocher nach Anspruch 6, **dadurch gekennzeichnet, daß** die Dichtung (13) durch Abformen oder durch Koformen erhalten ist.

11. Kochvorrichtungsdeckel für einen elektrischen Kocher nach den Ansprüchen 1 bis 10, **dadurch gekennzeichnet, daß** der äußere Einsatz (1) und der Gegendeckel (6) durch eine Clipverbindung zusammengefügt sind.

12. Kochvorrichtungsdeckel für einen elektrischen Kocher nach den Ansprüchen 1 bis 11, **dadurch gekennzeichnet, daß** der Gegendeckel (6) eine Schalenform aufweist.

13. Kochvorrichtungsdeckel für einen elektrischen Kocher nach den Ansprüchen 1 bis 12, **dadurch gekennzeichnet, daß** der Gegendeckel (6) aus verstärktem PBTP hergestellt ist.

## Claims

1. A lid for an electric cooking appliance, the lid being hinged to a vessel-support housing supporting a cooking vessel, and comprising an outer covering (1 ) and a lid-backing (6), the lid-backing having in particular both a vessel-closure surface for closing the vessel and the moving portion of a hinge (11, 17), the lid also having a fastening device (16) for fastening it to the vessel-support housing, the lid being **characterized in that** the vessel-closure surface and the moving portion of the hinge (11, 17) of the lid-backing are molded or thermoformed as a single piece of heat-resistant plastics material.

2. A lid for an electric cooking appliance according to claim 1, **characterized in that** the fastening device (16) is mounted on the lid-backing.

3. A lid for an electric cooking appliance according to claim 2, **characterized in that** the fastening device (16) of the lid-backing is molded as part of the same piece as the closure surface and the moving portion of the hinge.

4. A lid for an electric cooking appliance according to any one of claims 1 to 3, **characterized in that** the lid-backing includes a filter cartridge housing molded in the same piece.

5. A lid for an electric cooking appliance according to any one of claims 1 to 4, **characterized in that** the lid-backing includes an inspection window housing (18 molded in the same piece.

6. A lid for an electric cooking appliance according to any one of claims 1 to 5, **characterized in that** the lid-backing includes a gasket (13) designed to rest on the top edge of the vessel and removably mounted around the vessel-closure surface.

7. A lid for an electric cooking appliance according to claim 6, **characterized in that** the gasket (13) is mounted on a rib (15) surrounding the vessel-closure surface.

8. A lid for an electric cooking appliance according to claim 6, **characterized in that** the gasket (13) has projections (12) which are inserted in sockets (8) in the lid-backing (6) provided for this purpose and distributed all around the vessel-closure surface.

9. A lid for an electric cooking appliance according to claim 6, **characterized in that** the gasket (13) is fixed by adhesive.

10. A lid for an electric cooking appliance according to claim 6, **characterized in that** the gasket (13) is obtained by overmolding or by comolding.

11. A lid for an electric cooking appliance according to any one of claims 1 to 10, **characterized in that** the outer covering (1 ) and the lid-backing (6) are assembled together by snap-fastening.

12. A lid for an electric cooking appliance according to any one of claims 1 to 11, **characterized in that** the lid-backing (6) is in the form of a shell.

13. A lid for an electric cooking appliance according to any one of claims 1 to 12, **characterized in that** the lid-backing (6) is made of filled PBTP.
